Europäisches Patentamt

European Patent Office

Office européen des brevets

(11) Numéro de publication: **0 390 697**
**A1**

## (12) DEMANDE DE BREVET EUROPEEN

(21) Numéro de dépôt: **90400877.8**

(22) Date de dépôt: **30.03.90**

(51) Int. Cl.⁵: **B23B 29/034**

(30) Priorité: **31.03.89 FR 8904238**

(43) Date de publication de la demande:
**03.10.90 Bulletin 90/40**

(84) Etats contractants désignés:
**DE FR GB IT**

(71) Demandeur: **GAMET PRECISION**
**Route d'Epégard**
**F-27110 Le Neubourg(FR)**

(72) Inventeur: **Le Moal, Jean-Pierre**
**26 rue Ivan Tourgueneff**
**F-78380 Bougival(FR)**

(74) Mandataire: **Colas, Jean-Pierre et al**
**Cabinet de Boisse 37, avenue Franklin D.**
**Roosevelt**
**F-75008 Paris(FR)**

(54) **Appareil à aléser et surfacer, à avance et recul automatiques.**

(57) Appareil à aléser et surfacer, à avance et recul automatiques, dans lequel les déplacements d'un chariot (4) portant un outil sont réalisés à l'aide d'une vis d'entraînement (12), cette vis étant entraînée par un système comprenant au moins une roue rochet (13, 14) entraînée par un cliquet (20, 21) qui la fait tourner, à chaque tour de l'appareil, d'un angle correspondant à l'intervalle entre deux dents de la roue à rochet. Il y a, de préférence, deux systèmes à roue à rochet et cliquet, l'un pour l'avance du chariot, l'autre pour le recul, et un mécanisme à bascule met l'un ou l'autre en action suivant le sens de rotation de l'appareil.

FIG.:4

## Appareil à aléser et surfacer, à avance et recul automatiques.

La présente invention est relative à un appareil à aléser et surfacer, à avance et recul automatiques, pour machines telles que fraiseuse, centre d'usinage ou unité de fraisage dans une chaîne-transfert.

Les appareils à aléser et surfacer sont des accessoires qui se fixent, de la même façon que les outils, dans la broche d'une fraiseuse, d'un centre d'usinage ou d'une unité de fraisage de chaîne-transfert. La mise en rotation de la broche sur son axe entraîne la rotation de l'appareil. Un outil, par exemple un outil d'enlèvement de métal, est fixé dans un chariot dont les glissières sont perpendiculaires à l'axe de broche. Le déplacement du chariot permet de régler à volonté la distance de l'outil à l'axe, c'est-à-dire sa position radiale. L'outil permet ainsi, notamment, de réaliser un alésage de plus ou moins grand diamètre. La position du chariot peut être modifiée manuellement, cependant les appareils automatiques possèdent un mécanisme permettant un déplacement automatique du chariot. Dans les appareils connus, le système d'avance est basé en général sur une transmission mécanique à engrenage, avec une vis d'avance liée à une bague de commande montée libre par rapport à l'appareil. Quand celui-ci est entraîné en rotation par la broche de la machine sur laquelle il est fixé, il suffit d'empêcher la rotation de la bague de commande, c'est-à-dire d'immobiliser celle-ci par rapport au bâti de la machine qui porte la broche. La rotation relative de la bague par rapport à l'appareil entraîne alors le déplacement radial, par exemple l'avance, du chariot porte-outil. Une rotation de la broche en sens inverse provoque, par conséquent, le recul du chariot porte-outil.

Pour arrêter le déplacement radial du porte-outil, on libère la bague par rapport au bâti de la machine, elle se trouve alors entraînée en rotation avec l'appareil, et ne fait plus tourner la vis d'avance. Si le contrôle est manuel, il faut compter le nombre de tours de broche et intervenir sur l'organe d'immobilisation de la bague pour obtenir l'arrêt du chariot au bon moment.

Certains appareils sont équipés de butées d'avance et de recul qui débrayent le mécanisme d'avance lorsque le déplacement du chariot a atteint une certaine valeur. L'arrêt est alors automatique. Pour réaliser le recul, il faut alors réenclencher le mécanisme et faire tourner la broche en sens inverse. Cela peut également se faire automatiquement, mais au prix de nouvelles complications, par adjonction d'organes de commande externes.

Il existe aussi des têtes motorisées, avec un arbre supplémentaire pour le déplacement radial de l'outil, mais la complexité de l'appareil ainsi que la nécessité d'un branchement électrique rotatif entraînent un coût très élevé.

Le but de la présente invention est de fournir un appareil du type indiqué ci-dessus qui soit simple, sans branchement électrique ni organe de commande externe, et d'un coût peu élevé.

Pour obtenir ce résultat, la présente invention fournit un appareil à aléser et surfacer à avance et recul automatiques, destiné à être utilisé dans une machine telle qu'un centre d'usinage, cette machine comportant une broche apte à recevoir un outil et à l'entraîner en rotation autour d'un axe, ledit appareil comprenant :
- une queue destinée à être montée dans la broche à la place d'un outil,
- un chariot porteur d'outil, ce chariot étant porté par un porte-chariot solidaire de la queue et capable de se déplacer perpendiculairement à son axe,
- des moyens pour déplacer le chariot perpendiculairement audit axe lors de la rotation de l'appareil, ces moyens comprenant une transmission mécanique entraînée par ladite rotation elle-même,

cet appareil ayant pour particularité que les moyens pour déplacer le chariot comprennent une vis d'entraînement sans fin solidaire d'au moins une roue à rochet, associée à un cliquet qui fait tourner la roue à rochet d'un angle correspondant à une dent à chaque tour de l'appareil, la vis, la roue à rochet et le cliquet tournant avec l'appareil, et une pièce d'entraînement, immobile par rapport à la machine pendant le travail, actionnant le cliquet à chaque tour pour lui faire entraîner la roue à rochet.

De préférence, la vis d'entraînement porte deux roues à rochet coopérant chacune avec un cliquet, les deux cliquets étant capables d'agir pour faire tourner la vis en sens opposé, un cliquet agissant pour faire tourner la vis dans un sens lorsque l'appareil tourne dans un sens, et l'autre cliquet agissant pour faire tourner la vis en sens opposé lorsque l'appareil tourne dans l'autre sens, et des moyens sont prévus pour mettre en action l'un ou l'autre cliquet selon le sens de rotation de l'appareil, l'autre cliquet étant alors maintenu au repos.

Avantageusement, dans ce cas, les moyens pour mettre en action ou au repos l'un ou l'autre cliquet comprennent un anneau creux, entraînant une pièce de came en rotation avec friction par le porte-chariot, avec des moyens pour l'immobiliser par rapport à la machine, la pièce de came étant montée à bascule sur un pivot qui peut être perpendiculaire ou parallèle à l'axe de rotation, et une rampe capable de faire basculer ladite pièce mobile vers une position ou une autre selon le sens de rotation de l'appareil.

On peut prévoir, selon le cas, que l'appareil comprend une seule pièce de came, ou bien qu'il comprend plusieurs pièces de came réparties dans l'anneau et basculant autour d'autant d'axes, le nombre d'impulsion par tour actionnant les cliquets étant égal au nombre de pièces à came.

Un avantage des roues à cliquet est de permettre, de façon très simple, de fortes démultiplications du mouvement. Supposons que la vis d'entraînement ait un pas de 1 mm, et que la roue à rochet possède vingt dents, chaque déplacement du cliquet correspondra à un déplacement de 0,05 mm.

Suivant une réalisation préférée, chaque cliquet est pourvu d'un ressort de rappel pour l'écarter de la roue à rochet, et des patins sont déplacés par le chariot pour venir empêcher le mouvement de recul du cliquet lorsque le déplacement du chariot atteint une limite fixée à l'avance.

Le système employé procure un arrêt du mouvement de la vis d'avance non pas par un débrayage du mécanisme d'entraînement, mais par un simple arrêt du fonctionnement du système à cliquet. Comme la roue à rochet est fixée sur la vis d'avance, on voit que la transmission du mouvement pour ordonner l'arrêt du mouvement d'avance ou de recul du chariot porte-outil est aussi courte et simple qu'il est possible.

Dans certains cas, la précision obtenue avec l'ensemble roue à rochet - et cliquet, qui correspond au pas de la vis d'entraînement divisé par le nombre de dents de la roue à rochet peut se trouver insuffisant. Suivant une modalité avantageuse, on prévoit que la vis d'entraînement est reliée au chariot par l'intermédiaire d'une douille présentant un premier filetage, grâce auquel elle coopère avec la vis d'entraînement, et un second filetage, grâce auquel elle est reliée au chariot, ces deux filetages ayant des pas légèrement différents, pour un réglage fin de la position d'arrêt du chariot en fin de course dans les deux sens, ou au moins dans le sens d'avance. Par un choix judicieux des deux pas de vis, et en contrôlant la rotation de la douille par rapport au chariot à l'aide d'une vis micrométrique, on peut obtenir une très grande précision. Bien entendu, il convient que la douille soit convenablement immobilisée dans la position choisie.

Suivant une autre modalité avantageuse, spécialement pour les centres d'usinage, l'appareil comprend des moyens pour immobiliser les différentes pièces mobiles lorsque l'appareil est séparé de la machine, placé dans le magasin d'outils par exemple.

L'invention va maintenant être exposée de façon plus détaillée à l'aide d'un exemple pratique de réalisation, illustré à l'aide des dessins, parmi lesquels :

Figure 1 est une vue en élévation de l'ensemble de l'appareil avec arrachement partiel, à une échelle un peu plus réduite que celle des autres figures.

Figure 2 est une vue partielle, prise sous le même angle que la figure 1, avec un autre arrachement partiel.

Figure 3 est une vue partielle de l'ensemble de l'appareil, en élévation, perpendiculairement aux figures 1 et 2, partiellement en coupe selon la ligne III-III de la figure 1.

Figure 4 est une vue de dessus, en coupe, selon la ligne IV-IV de la figure 1.

Figure 5 est une vue de côté, en coupe, selon la ligne V-V de la figure 4.

Figure 6 est une vue de dessus, partiellement en coupe, selon la ligne VI-VI de la figure 3.

Figure 7 est une vue en coupe selon la ligne VII-VII de la figure 6.

Figure 8 est une vue partiellement en élévation de côté, selon la flèche VIII de la figure 6, et partiellement en coupe selon la ligne VIII-VIII de la même figure 6.

Figures 9 et 10 sont des vues analogues aux figures 6 et 7, mais montrant les pièces dans une autre position.

Figure 11 est une vue analogue à la figure 1 d'une variante préférée de l'appareil.

Figure 12 est une vue analogue à la figure 2 de la variante de la figure 11.

Figure 13 est une vue analogue à la figure 3 de la même variante.

Figures 14 et 15 sont des vues analogues aux figures 6 et 9 de la même variante.

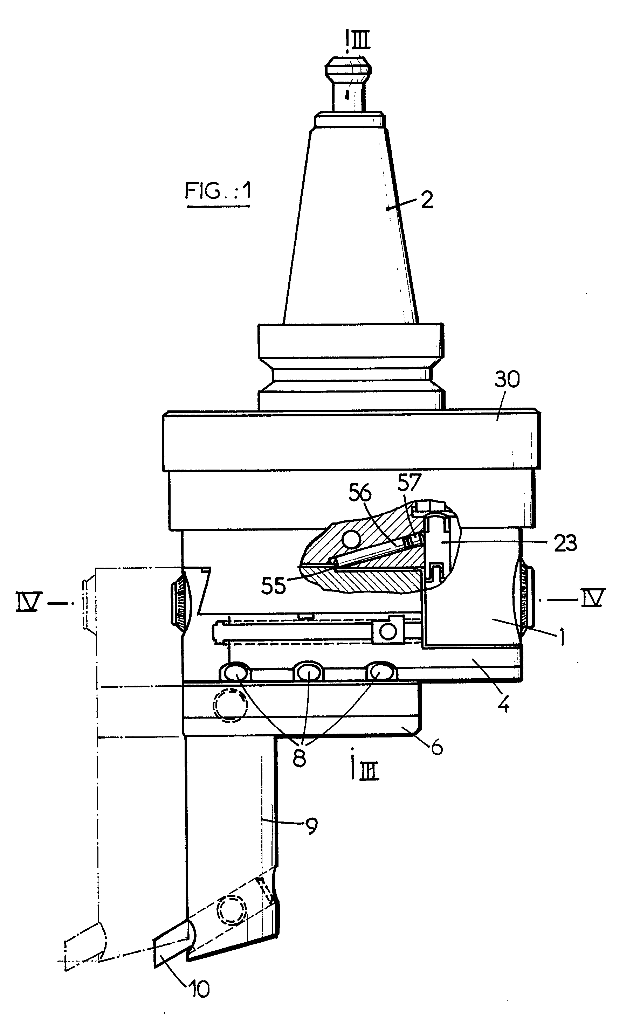

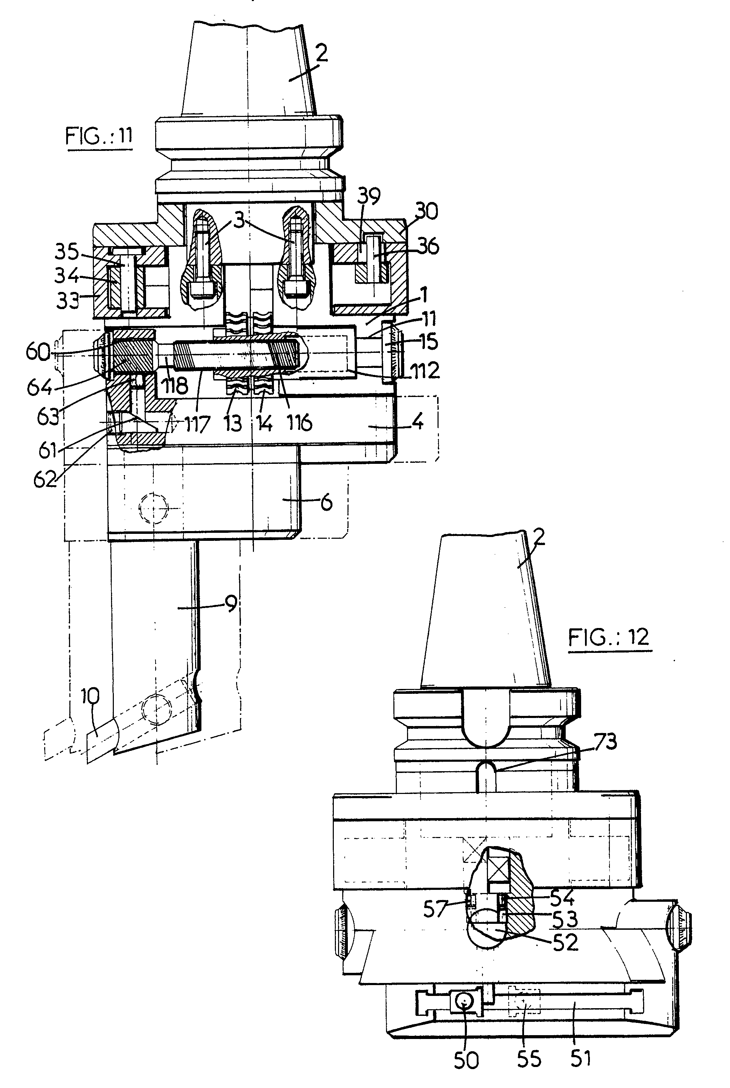

Sur toutes les figures, les pièces équivalentes portent les mêmes repères. Des éléments de la variante des figures 11 à 15 qui ne sont pas identiques à ceux des figures 1 à 10 portent des repères à trois chiffres.

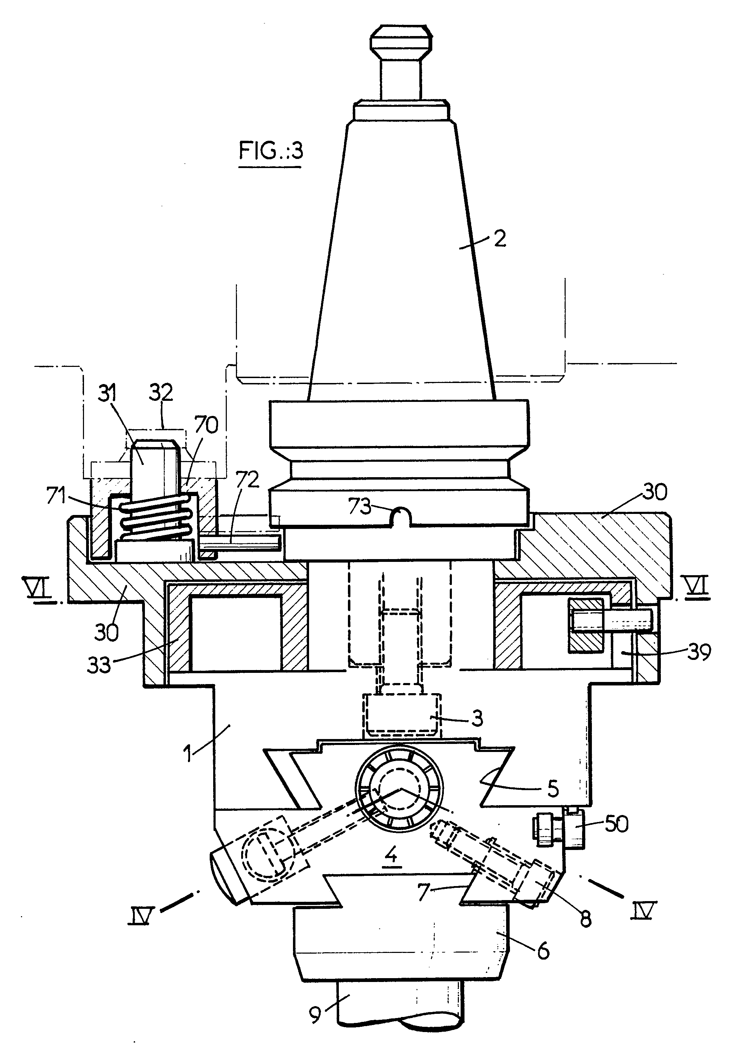

L'appareil décrit aux figures comporte, comme élément principal, un porte-chariot 1, sur lequel est fixée une queue 2, interchangeable pour permettre d'adapter l appareil à des machines correspondant à des normes différentes. Des vis 3, voir figure 3, fixent la queue sur le porte-chariot. Celui-ci sera décrit de façon plus détaillée dans la suite.

Un chariot 4 est monté sur le porte-chariot 1, et peut coulisser sur celui-ci, perpendiculairement à l'axe de la queue, grâce à une liaison à queue d'aronde 5 (voir figure 3). D'autres solutions de glissières sont possibles. Le chariot 4 porte lui-même un coulisseau 6 par l'intermédiaire d'une seconde liaison à queue d'aronde 7, parallèle à la queue d'aronde 5, et dont un côté peut être déplacé à l'aide de vis 8 afin d'assurer le blocage en position dudit coulisseau sur le chariot. Le coulisseau 6 porte un bras 9, lequel porte, vers son extrémité, l'outil de travail 10.

La disposition décrite correspond à un réglage manuel de la position du coulisseau par rapport au chariot. On peut aussi prévoir que le déplacement du coulisseau (6) par rapport au chariot (4) est automatique et engendré par un organe extérieur à l'appareil.

La figure 1 montre le chariot, le coulisseau et l'outil de travail en position reculée, et on a dessiné, en traits mixtes, la position occupée par les bords de ces pièces lorsque le chariot est dans sa position d'extension extrême par rapport au porte-chariot.

A la figure 11, le chariot et le coulisseau sont représentés en position médiane, et on a dessiné en traits mixtes le bord de ces pièces lorsqu'elles sont dans leurs positions extrêmes.

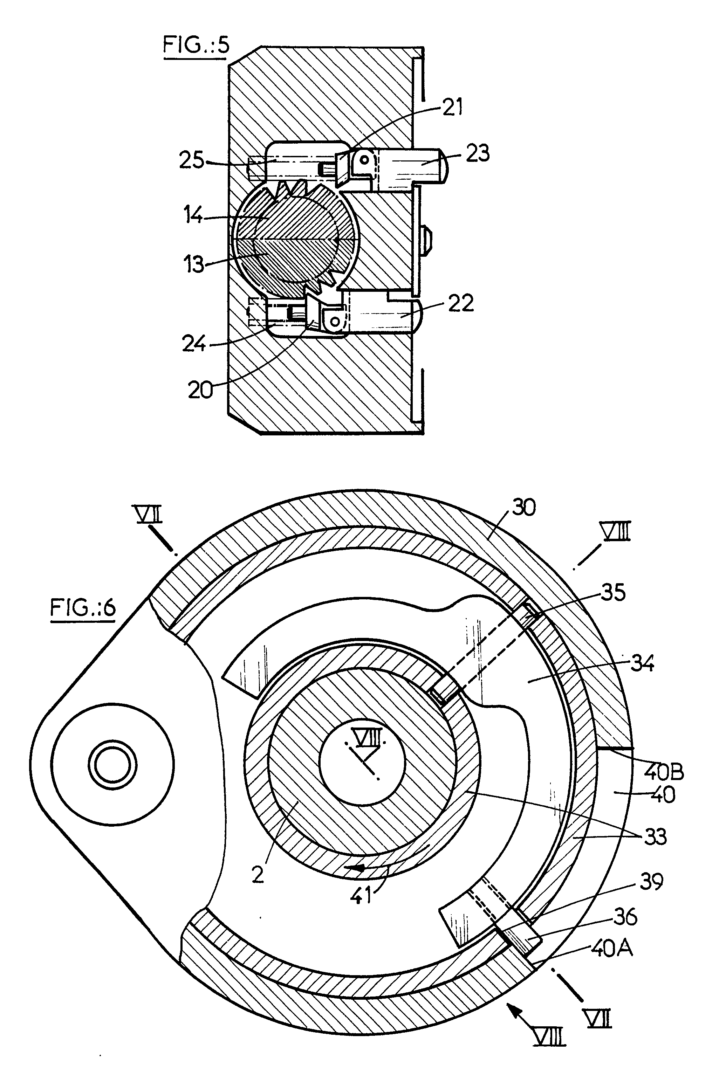

Le mécanisme d'entraînement du chariot 4 sera expliqué en s'aidant tout d'abord des figures 4 et 5. Un palier 11, fixé au porte-chariot 1, maintient une vis de commande 12 parallèle à la liaison à queue d'aronde 5. Cette vis 12 porte deux pignons 13, 14, formant des roues à rochet, à dentures inversées. La vis 12 se termine, au-delà des pignons 13, 14, par un vernier gradué 15. La partie filetée 16 de la vis 12 coopère avec un alésage femelle 17 d'une douille 18 solidaire du chariot 4.

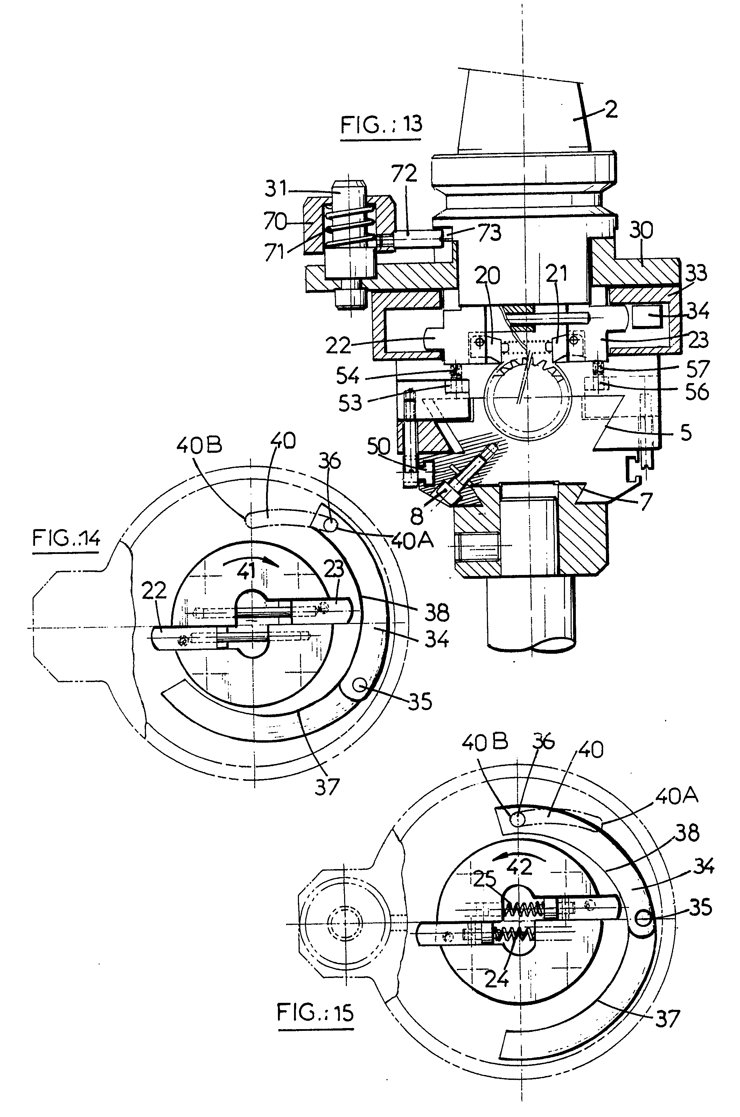

Si on se reporte maintenant aux figures 11 et 13, on constate que les pignons 13 et 14 sont maintenant portés par un écrou 112, qui se termine par le vernier 15. La zone filetée de l'écrou 112 coopère avec la partie filetée 116 d'une vis 118 solidaire du chariot 4.

Un cliquet 20 est conçu pour coopérer avec la denture de la première roue à rochet 13, et un cliquet 21 est, de même, conçu pour coopérer avec la denture de la deuxième roue à rochet 14. Les cliquets 20 et 21 sont portés respectivement par des supports 22, 23, mobiles à coulissement dans une direction parallèle à l'axe de la queue, dans le cas des figures 1 à 5 et perpendiculaires à cet axe dans le cas des figures 11 à 15. Les cliquets 20 et 21 sont décalés radialement par rapport à cet axe, comme cela est visible aux figures 4 et 13.

Des ressorts de rappel 24 et 25 poussent respectivement les supports,22 et 23 pour amener les cliquets 20 et 21 hors d'engagement des roues à rochet 13, 14 correspondantes.

Le mode d'actionnement des cliquets 20, 21 va maintenant être exposé en s'aidant des figures 3 et 6 à 10. Il est le même dans le cas des figures 11 à 15.

Sur le porte-chariot 1, un carter 30 est monté de façon à pouvoir tourner librement autour de l'axe de la queue 2. Ce carter 30 porte un arrêtoir 31, qui, en fonctionnement, pénètre dans une cavité 32 de la machine, représentée en traits mixtes à la figure 3. On conçoit que, lorsque l'appareil est entraîné en rotation par la queue 2, le carter 30 reste immobile. A l'intérieur du carter 30 est fixé un anneau creux 33, qui peut également tourner par rapport au porte-chariot 2, mais avec un frottement déterminé. Cet anneau creux est coaxial au carter 30.

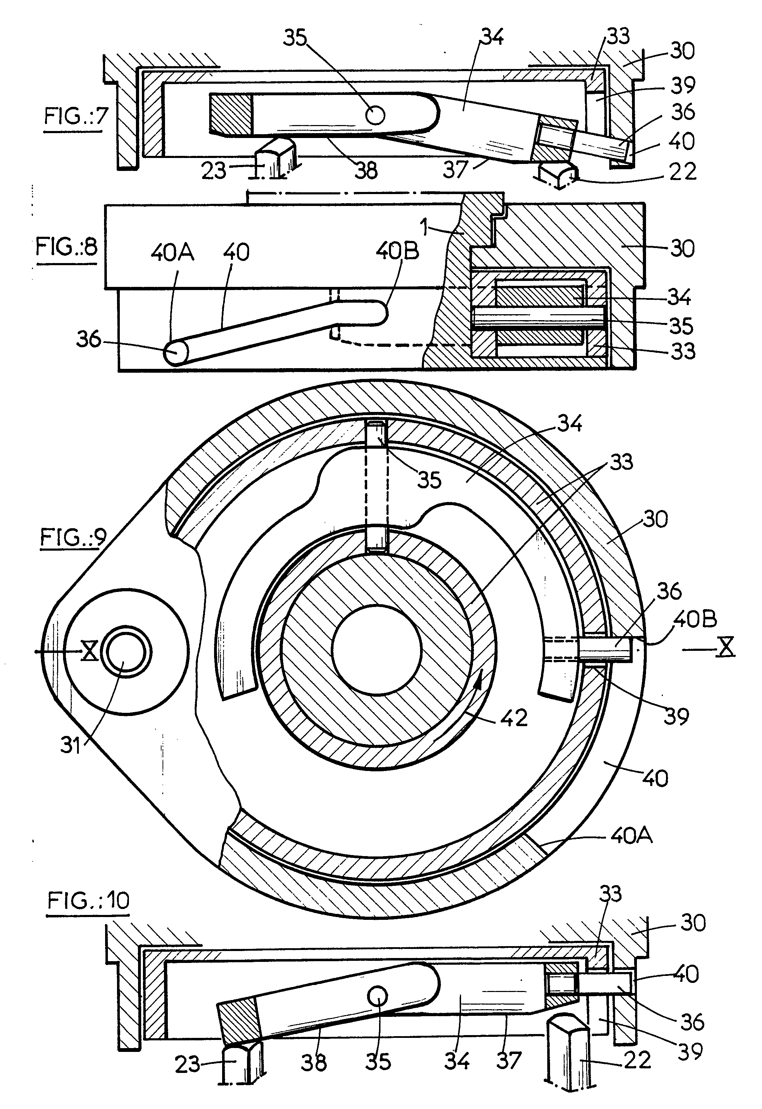

Une pièce de came 34 est montée à l'intérieur de l'anneau creux 33, par l'intermédiaire d'un pivot 35, ce qui lui permet d'osciller entre deux positions représentées aux figures 7 et 10. La pièce de came 34 porte un ergot de guidage 36, dont on va expliquer l'utilité. La pièce de came 34 comporte deux surfaces de came 37, 38, destinées respectivement à coopérer avec l'extrémité des supports 22, 23 des cliquets 20, 21, pour repousser ces cliquets en opposition à la force des ressorts de rappel respectifs 24, 25, si bien que le cliquet 20, ou 21, vient en appui sur une dent de la roue à rochet correspondante 13, 14, et fait tourner cette roue d'un angle correspondant à l'intervalle entre deux de ses dents.

L'ergot de guidage 36 traverse la paroi extérieure de l'anneau creux 33 par une fente axiale 39, et pénètre dans une lumière oblique 40 du carter 30 (figures 7 à 9).

Le fonctionnement de cette partie du dispositif est le suivant : supposons que l'appareil tourne dans le sens horaire, symbolisé par la flèche 41 à la figure 6, l'anneau creux 33, entraîné par la friction, se déplace dans le même sens. Il entraîne, par l'intermédiaire du pivot 35, la pièce de came 34, jusqu'à ce que l'ergot de guidage 36 atteigne l'extrémité 40A de la lumière oblique 40. L'anneau creux 33 et la pièce à came 34 s'immobilisent alors, dans une position telle que celle représentée aux figures 7 et 8, où la surface de came 37 vient actionner le support de cliquet 22.

A chaque rotation, le cliquet 20 porté par le support 22 fait tourner, d'un angle égal à l'intervalle entre deux dents, la roue à rochet 13, et, par conséquent, la vis de commande 12. Supposons maintenant qu'on inverse le sens de rotation de l'appareil, ce nouveau sens étant symbolisé par la flèche 42 de la figure 9.

L'anneau creux 33 est entraîné par friction en sens inverse, si bien que l'ergot de guidage 36 se déplace dans la lumière oblique 40, jusqu'à atteindre l'extrémité opposée 40B de celle-ci. Dans ce mouvement, le fait que la lumière 40 est oblique a pour conséquence que la pièce à came 34 bascule sur son pivot 35 pour venir occuper la position visible à la figure 10, dans laquelle la surface de came 38 vient agir pour déplacer le support 23 du cliquet 21, ce qui a pour conséquence qu'à chaque tour la vis de commande 12 tourne en sens inverse, d'un angle égal à l'écart angulaire entre deux dents de la roue à rochet correspondante 14.

Ainsi, on obtient par des moyens très simples que l'inversion du sens de rotation de l'appareil entraîne une inversion du sens de déplacement, vers l'avance ou le recul, du chariot 4.

Dans le cas de la réalisation des figures 11 à 15, ce qui vient d'être dit est encore valable, à condition de remplacer la vis de commande 12 par l'écrou 112.

On observera en outre que, comme on peut le voir aux figures 14 et 15, le pivot 35 est maintenant parallèle à l'axe de la queue et la lumière 40 est non plus oblique, mais en forme de fraction de spirale. La réalisation est plus robuste et plus facile.

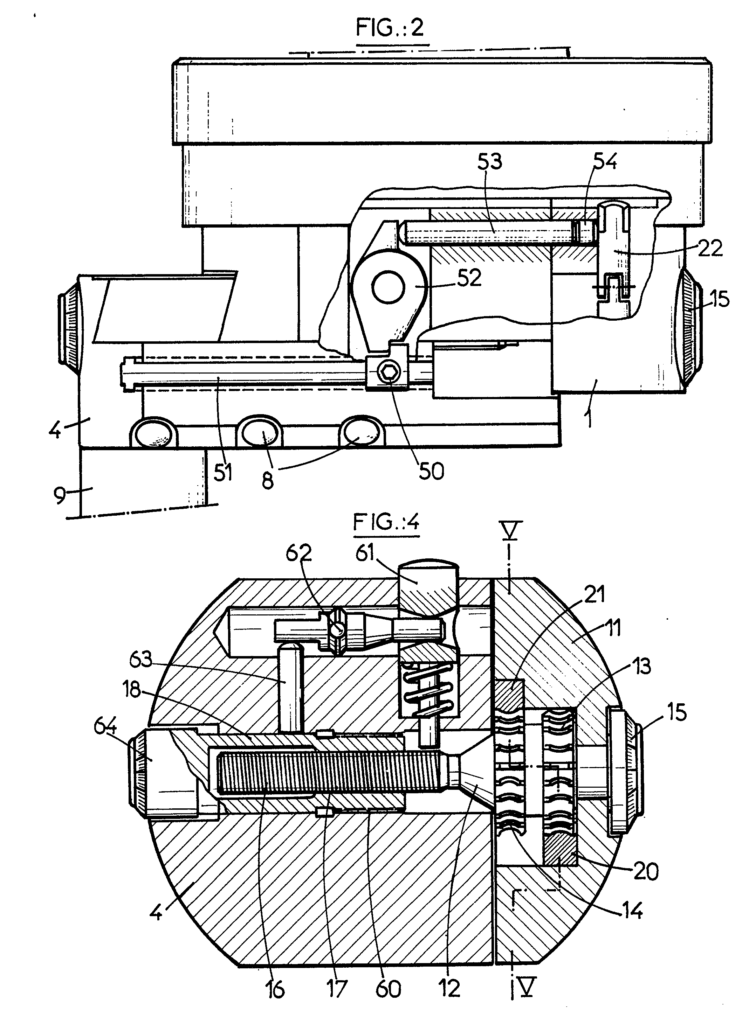

On va maintenant exposer les moyens d'arrêt du mouvement de la vis d'entraînement 12. Une butée 50 (Figure 2) est portée par le chariot 4, et est réglable en position grâce à une rainure 51, parallèle à la queue d'aronde 5. Un levier pivotant 52, porté par le porte-chariot 1, déplace, quand il est actionné par le déplacement de la butée 50, un poussoir 53 dont l'extrémité comporte un patin 54, qui vient porter contre le support 22 du cliquet 21 qui commande le mouvement d'avance du chariot. L'action du patin 54 sur le support 22 empêche le recul du support 22, neutralisant l'effet du ressort de rappel 24. Le cliquet étant immobilisé, la vis 12 cesse de tourner. Pour le mouvement de recul, on emploie un dispositif analogue, mais encore plus simple : le chariot porte une butée 55 (Figure 1) qui actionne directement un poussoir 56 pourvu d'un patin 57, et ce patin 57 vient arrêter le mouvement du support 23 du cliquet 21 qui commande le mouvement de recul du chariot.

La précision de l'arrêt de l'avance correspond à un intervalle de denture de la roue à rochet, lié au pas de la vis 12. Supposons que la roue à rochet 13 possède vingt dents, et que la vis ait un pas d'un millimètre, la précision de l'arrêt est donc 0,05 mm. Cela peut être insuffisant pour certains usinages. Le mécanisme pour obtenir un réglage plus fin va être exposé en s'aidant de la figure 4. La douille 18 est fixée à l'intérieur du chariot 4 par un filetage mâle 60 reçu dans un filetage femelle du chariot. Ce filetage mâle a un pas différent de celui de la vis de commande 12, par exemple un pas de 1,10 mm. Un poussoir à ressort 61 est disposé pour immobiliser en rotation la vis 12. Ce poussoir commande un levier 62, lequel appuie sur une pièce de freinage 63, qui empêche la rotation de la douille 18 dans le chariot 4. En appuyant sur le poussoir 61, on immobilise la vis 12, et simultanément on libère la douille 18. Celle-ci porte un vernier 64. Par rotation de la douille 18, la vis 12 étant immobilisée, on entraîne le chariot en déplacement, un tour de la douille correspondant à la différence entre le pas de la partie filetée 16 de la vis 12 et le pas du filetage mâle 60 de la douille 18. Si le vernier 64 présente cent divisions, une division du vernier correspond à 0,001 mm, dans l'exemple choisi. On peut donc ainsi fixer avec une grande précision l'arrêt de l'avance. En ce qui concerne le recul, une telle précision n'est évidemment pas nécessaire.

Dans l'exemple choisi, le mouvement d'avance correspond à un déplacement de l'outil de travail pour l'écarter de l'axe de rotation. Il est à la portée de l'homme de métier de faire les modifications nécessaires pour le cas où le mouvement d'avance se fait, au contraire, en direction de l'axe, et le mouvement de recul en sens opposé.

Les moyens pour empêcher un déplacement relatif des différentes parties de l'appareil lorsqu'il n'est pas utilisé, par exemple lorsqu'il est dans un magasin à outils, vont être exposés en s'aidant de la figure 3. Une douille 70 est placée autour de l'arrêtoir 31, elle est repoussée par un ressort 71. Une tige 72, solidaire de la douille 70, peut pénétrer dans une encoche 73 de la queue 2. Lorsque l'appareil est retiré de la machine, une rotation du carter 30 par rapport à la queue 2 amène la tige 72 à pénétrer dans l'encoche 73, ce qui assure l'immobilisation en rotation de ce carter 30 par rapport au porte-chariot 1, et empêche tout déplacement relatif des pièces de l'appareil. Lorsque l'arrêtoir 31 est enfoncé dans la cavité 32 de la machine, les bords de cette cavité repoussent la douille 70. La tige 72 sort alors de l'encoche 73, ce qui libère le carter 30 et les diverses pièces de l'appareil.

## Revendications

1. Appareil à aléser et surfacer à avance et recul automatiques, destiné à être utilisé dans une machine telle qu'un centre d'usinage, cette machine comportant une broche apte à recevoir un outil et à l'entraîner en rotation autour d'un axe, ledit appareil comprenant:
- une queue (2) destinée à être montée dans la broche à la place d'un outil,
- un chariot (4) porteur d'outil, ce chariot étant porté par un porte-chariot (1) solidaire de la queue et capable de se déplacer perpendiculairement à son axe,
- un système vis-écrou (12, 18) disposé pour entraîner le chariot perpendiculairement audit axe de rotation d'appareil, la vis ou écrou portant deux roues à rochet (13, 14) coopérant chacune avec un cliquet (20, 21), les deux cliquets étant capables d'agir pour faire tourner la vis en sens opposé, un cliquet agissant pour faire tourner la vis dans un sens lorsque l'appareil tourne dans un sens, chaque cliquet faisant tourner la roue à rochet d'un angle correspondant à une dent à chaque tour de l'appareil, la vis ou l'écrou, la roue à rochet et le cliquet tournant avec l'appareil,
- une pièce d'entraînement, immobile par rapport à la machine pendant le travail, déplaçant le cliquet à chaque tour pour lui faire entraîner la roue à rochet, et des moyens (34, 36, 40) prévus pour mettre en action l'un ou l'autre des cliquets selon le sens de rotation de l'appareil, le cliquet qui n'est pas en action étant alors maintenu au repos, caractérisé en ce que les moyens pour mettre en action ou laisser au repos l'un ou l'autre cliquet sont disposés pour être actionnés de façon automatique sous l'effet du sens de rotation de l'appareil.

2. Appareil selon la revendication 1, caractérisé en ce que les moyens pour mettre en action ou laisser au repos l'un ou l'autre cliquet comprennent un anneau creux (33) entraînant une pièce de came (34) en rotation par friction avec le porte-chariot (1) et des moyens (30, 31) pour l'immobiliser par rapport à la machine, la pièce de came étant montée à bascule sur un pivot (35) et une rampe (40) capable de faire basculer ladite pièce de came vers une position ou une autre selon le sens de rotation de l'appareil.

3. Appareil selon la revendication 2, caractérisé en ce que le pivot (35) est perpendiculaire à l'axe de rotation.

4. Appareil selon la revendication 2, caractérisé en ce que le pivot (35) est parallèle à l'axe de rotation.

5. Appareil selon l'une des revendications 1 à 4, caractérisé en ce que chaque cliquet (20, 21) est pourvu d'un ressort de rappel (24, 25) pour l'écarter de la roue à rochet, et des patins (54, 57) sont déplacés par le chariot pour venir empêcher le mouvement de recul du cliquet lorsque le déplacement du chariot atteint une limite fixée à l'avance.

6. Appareil selon une des revendications 1 à 5, caractérisé en ce qu'il comprend plusieurs pièces de came (34) réparties dans l'anneau (33) et basculant autour d'autant d'axes (35), le nombre par tour d'impulsions actionnant les cliquets étant égal au nombre de pièces à came.

7. Appareil selon une des revendications 1 à 6, dans lequel les roues à rochet sont portées par une vis sans fin (12), caractérisé en ce que la vis d'entraînement (12) est reliée au chariot par l'intermédiaire d'une douille (18) présentant un premier filetage, grâce auquel elle est reliée au chariot (4), ces deux filetages ayant des pas légèrement différents, pour un réglage fin de la position d'arrêt du chariot en fin de course.

8. Appareil selon une des revendications 1 à 6, dans lequel les roues à rochet sont portées par un écrou (118), caractérisé en ce que la vis d'entraînement est reliée au chariot par l'intermédiaire d'un filetage d'un pas légèrement différent de celui de l'écrou afin de permettre un réglage du chariot en fin de course, la vis d'entraînement étant immobilisée par rapport au chariot en fonctionnement normal.

9. Appareil selon une des revendications 1 à 8, caractérisé en ce qu'il comprend des moyens (70 à 73) pour empêcher un déplacement relatif des différentes parties de l'appareil lorsque celui-ci est séparé de la broche de la machine.

10. Appareil selon l'une des revendications 1 à 9, caractérisé en ce qu'un coulisseau mobile (6) porté par le chariot (4) reçoit l'outil (10).

11. Appareil suivant la revendication 10, caractérisé en ce que le déplacement du coulisseau (5) par rapport au chariot (4) est automatique et engendré par un organe extérieur à l'appareil.

12. Appareil selon la revendication 10, caractérisé en ce que le déplacement du coulisseau (6) par rapport au chariot (4) est fait manuellement.

FIG.:1

FIG.: 2

53  54

22

52

15

4

51  8

9  50

1

FIG.: 4

62  61

21

11

63  13

18

64  15

4

20

14

16  17  60  12

FIG.:3

FIG.:5

FIG.:6

FIG.:7

FIG.:8

FIG.:9

FIG.:10

FIG.: 11

FIG.: 12

FIG. : 13

FIG. 14

FIG. : 15

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | CH-A- 232 960 (MONTIS)<br>* Page 2; figures 1-4 *<br>--- | 1 | B 23 B  29/034 |
| A | US-A-2 283 323 (EHRHARDT)<br>--- | | |
| A | CH-A- 242 396 (SCHWEIZER)<br>--- | | |
| A | DE-B-1 010 351 (MAYR, HÖRMANN)<br>--- | | |
| A | FR-A- 997 324 (GOBLET)<br>--- | | |
| A | FR-E- 58 672 (GOBLET)<br>----- | | |

DOMAINES TECHNIQUES
RECHERCHES (Int. Cl.5)

B 23 B  29/00

Le présent rapport a été établi pour toutes les revendications

| Lieu de la recherche | Date d'achèvement de la recherche | Examinateur |
|---|---|---|
| LA HAYE | 28-06-1990 | BOGAERT F.L. |